# EUROPEAN PATENT SPECIFICATION

(11) **EP 0 876 418 B1**
(45) Date of publication and mention of the grant of the patent: **26.09.2001**
(21) Application number: 97929006.1
(22) Date of filing: 11.06.1997
(51) Int. Cl.: C08G 65/30, C08G 65/32, C08G 18/48, C07C 41/32

(54) **PROCESS FOR PREPARING LOW UNSATURATION POLYETHER POLYOLS**
VERFAHREN ZUR HERSTELLUNG VON NIEDRIGUNGSATTIGEN POLYETHERPOLYOLEN
PROCEDE DE PREPARATION DE POLYOLS DE POLYETHER A FAIBLE INSATURATION

(30) Priority: 11.06.1996 WO PCT/US96/10104; 04.11.1996 US 743366
(43) Date of publication of application: 11.11.1998
(73) Proprietor: HUNTSMAN PETROCHEMICAL CORPORATION, Austin, Texas 78752 (US)
(72) Inventor: LAMBERT, Timothy, L., Austin, TX 78759 (US)
(74) Representative: Winkler, Andreas, Dr.
(86) International application number: US9710707
(87) International publication number: WO9815590

(56) References cited:
- EP-A- 0 195 910
- EP-A- 0 408 201
- EP-A- 0 466 150
- WO-A-90/11990
- WO-A-91/03449
- DEGE G.J ET AL: "Terminal unsaturation in polypropylene glycol" J. AMERICAN CHEM. SOC., vol. 81, 1959, pages 3374-3379, XP002013309

## Description

### BACKGROUND OF THE INVENTION

### 1. Field of the Invention

This invention relates to a process for preparing low unsaturation polyether polyols. More particularly, this invention relates to a process for the preparation of polyether polyols, such as polyoxypropylene glycols, having reduced levels of terminal unsaturation.

In the process of this invention allyl terminal unsaturation of a polyether in a first step is reduced by conversion to propenyl unsaturation by contacting the polyether with an isomerization catalyst after which from 60 to 100 percent of the propenyl terminal unsaturation is removed by contacting the polyether with an acid catalyst and the corresponding polyether having an additional hydroxyl group is obtained.

During the preparation of polyethers, such as polyoxypropylene glycols, with molecular weights greater than about 1000, monofunctional products having allyl ether terminal (CH₂ = CH - CH₂ - 0 -) groups are formed as a result of the base catalyzed rearrangement of propylene oxide to allyl alcohol and subsequent propoxylation of the allyl alcohol.

The problem of the rearrangement or conversion of propylene oxide to allyl alcohol increases substantially as the molecular weight of the polyoxypropylene glycol product increases. Thus, the problem of the formation of the monofunctional products, which is quite small in low molecular weight polyols, increases significantly as the molecular weight increases to 1000 or more.

It is typical for commercial polyoxypropylene glycol products prepared conventionally using basic catalysts, such as potassium hydroxide, to have unsaturated terminal groups in the range of about 3 - 4 mol percent of the total number of the terminal groups. These products having unsaturated terminal groups are undesirable for use in the preparation of polyurethanes since the unsaturated terminal groups which are unreactive toward isocyanates not only limit the molecular weight of the urethane product but, additionally, may cause deleterious physical property effects on the end product if the concentration of the unsaturated terminal groups is too high. Further, during the amination of the polyoxyalkylene glycols to form amine terminated polyols, the unsaturated terminal group is hydrogenated to a propyl group which is also unreactive toward isocyanates and may affect adversely the physical properties of the resulting polymer product. It is therefore desirable to prepare polyols with lowered levels of unsaturation to be used in preparing polyurethanes and amine terminated polyols with improved properties.

### 2. Prior Art

U.S. Patent No. 5,010,187 to Heuvelsland teaches a process for preparing a polyester polyol having an equivalent weight of from about 200 to about 5000 by reacting propylene oxide with an initiator containing at least two active hydrogens in the presence of a catalyst such as barium, strontium and their oxides, hydroxides, hydrated hydroxides or monohydroxide salts or mixtures thereof. The prepared polyol has a total unsaturation level of less than 0.080 millequivalents/gram polyol.

U.S. Patent No. 5,095,061 to Chavez, Jr., et al., teaches a process for reducing the amount of propenyl polyethers in hydroxy-functional polyethers which comprise contacting a neutral hydroxy-functional polyether containing a propenyl polyether and water and an acid catalyst soluble in the polyether, such as hydrochloric, sulfuric, phosphoric, etc., under reaction conditions sufficient to convert a portion of the propenyl polyether to propionaldehyde followed by scavenging the acid with an epoxy compound and finally removing the epoxy compound and the propionaldehyde.

U.S. Patent No. 5,103,042 to Durvasula teaches a method for reducing unsaturation in polyethers in which a polyether having at least a hydroxyl group and allyl terminal unsaturation is contacted with an allyl complex-forming catalyst, such as palladium and a hydrogen donor, such as ammonium formate, at a temperature below that at which significant decomposition of the polyether occurs whereby a measurable portion of the allyl terminal unsaturation of the polyol is removed and the corresponding polyether having an additional hydroxyl group is obtained.

Derwent Abstract A25 94-001294/01 to EP 576132-A1 discloses a process for reducing the level of unsaturation in polyoxyalkylene polyols by extracting with an immiscible low molecular weight polyol (i.e., less than 500) such as ethylene glycol, diethylene glycol, triethylene glycol, glycerol and butanediol, etc. The extraction may be carried out continuously or repeatedly (2-10 times) batchwise. The purified polyol products have superior properties to those made from untreated polyols.

### SUMMARY OF THE INVENTION

In one aspect this invention relates to a process for preparing a polyether having reduced terminal unsaturation comprising (1) contacting a polyether having at least one hydroxyl group and allyl terminal unsaturation with an isomerization catalyst, such as cesium, sodium or potassium hydroxide, or a ruthenium compound such as ruthenium (III) chloride, whereby the allyl terminal unsaturation of the polyether is reduced by conversion to propenyl terminal unsaturation, (2) removing the catalyst from the polyether product of step (1), and (3) contacting the polyether product of step (2) with an acid catalyst, such as acidic zeolite, whereby from 60 to 100 percent of the propenyl terminal unsaturation is removed and converted to propionaldehyde and the corresponding polyether having an additional hydroxyl group is obtained.

In a second aspect, this invention relates to a process for preparing a polyether polyol, such as a polyoxypropylene glycol having reduced terminal unsaturation comprising (1) reacting propylene oxide with an initiator having at least two hydroxyl groups in the presence of a basic catalyst, such as potassium hydroxide, at a temperature of about 90 to 150°C., at least a portion of the resulting polyether polyol being characterized by having allyl terminal unsaturation, (2) heating the polyether polyol of step (1) containing the basic catalyst at a temperature of about 110 to about 190°C, whereby the allyl terminal unsaturation is reduced by conversion to propenyl terminal unsaturation. In step (3), the catalyst is removed from the polyether product by any convenient method, such as by treatment with magnesium silicate followed by filtration. In a final step, the polyether polyol is contacted with an acidic zeolite whereby from 60 to 100 percent of the propenyl terminal unsaturation is removed.

In a third aspect, this invention relates to a process for preparing a polyether having reduced terminal unsaturation such as polyoxypropylene glycol comprising heating a mixture containing a polyether having at least one hydroxyl group and allyl terminal unsaturation and an isomerization catalyst, such as potassium hydroxide, whereby the allyl terminal unsaturation of the polyether is reduced by conversion to propenyl terminal unsaturation after which from 60 to 100 percent of the propenyl terminal unsaturation is removed by contacting the catalyst-free polyether with an acidic zeolite.

In a fourth aspect, this invention relates to a one-step process for preparing a polyether having reduced terminal unsaturation comprising contacting a polyether, having at least one hydroxyl group and allyl terminal unsaturation with a catalyst comprising a ruthenium compound, such as ruthenium (III) chloride, supported on silica gel whereby a polyether essentially free of terminal unsaturation is produced.

In a fifth aspect, this invention relates to an in-situ process for preparing a polyether polyol having an average molecular weight of about 1000 to about 5000 comprising reacting propylene oxide in the presence of a ruthenium catalyst with an initiator having at least two active hydrogens, such as a polyoxypropylene glycol having a molecular weight of about 400, and containing about 0.5 to about 10 weight percent of a basic catalyst, such as potassium hydroxide, based on the weight of the initiator whereby a polyether polyol free of terminal unsaturation is obtained.

### DESCRIPTION OF THE FIGURE

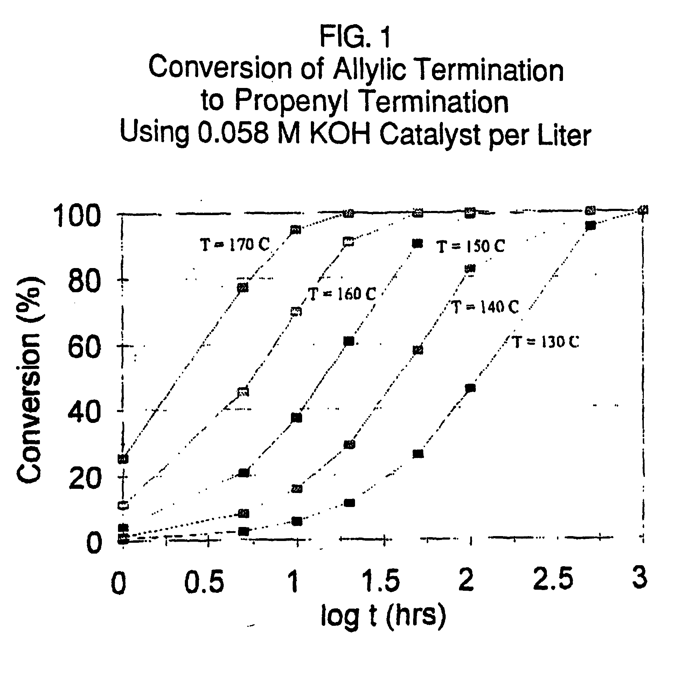

FIG. 1 is a chart showing conversion of allylic termination to propenyl termination as a function of time for various reaction temperatures using 0.058 M KOH catalyst per liter. The initial allylic termination is 3 mole percent of the total end groups.

### DETAILED DESCRIPTION OF THE INVENTION

For convenience in the description of the process of this invention unsaturation in the polyethers provided by CH₂ = CH - CH₂ - terminal group is referred to as "allyl" unsaturation whereas unsaturation provided by a CH₃ - CH = CH - terminal group is referred to as "propenyl" unsaturation.

This invention is suitable for reducing terminal unsaturation in a wide variety of polyethers. These include, for example, polyether polyols as exemplified by polyoxyalkylene glycols, etc. Such polyethers are produced by methods well known in the art. Typically, the polyethers are prepared by reacting an alcohol, preferably a polyhydric alcohol having about two to about eight hydroxyl groups, amine groups or other active hydrogen sites with one or more alkylene oxides.

In addition to terminal unsaturation, polyethers suitable for use in the process of this invention contain at least one hydroxyl group so that on removal of the terminal unsaturation a molecule having at least two hydroxyl groups per molecule is obtained.

The polyether suitable for use in this invention is advantageously a product prepared with an alkylene oxide which is susceptible to conversion to the corresponding alcohol. In such case, the terminal unsaturation at least in part is derived from such conversion and the subsequent reaction of the alkylene oxide with the thus-formed alcohol. Propylene oxide is by far the alkylene oxide most susceptible to such conversion. Accordingly, the preferred polyether is one produced by reaction of propylene oxide or a mixture of propylene oxide and another alkylene oxide such as ethylene oxide with a suitable initiator in the presence of a basic catalyst, such as potassium hydroxide, in which the oxypropylene units derived from propylene oxide constitute at least about 50 percent and preferably at least 65 to 85 percent by weight of the polyether. Polyethers produced by the sequential addition of ethylene oxide followed by propylene oxide are also useful in the processes of this invention.

Preferably, the polyethers are prepared from alkylene oxides having from about two to about six carbon atoms such as ethylene oxide, propylene oxide, butylene oxide and mixtures thereof.

Illustrative alcohols suitable for initiating formation of a polyalkylene polyether include glycerine; ethylene glycol; 1,3-propylene glycol; dipropylene glycol; 1,2-propylene glycol; 1,4-butylene glycol; 1,3-butylene glycol; 1,2-butylene glycol; 1,5-pentane diol; 1,7-heptane diol; glycerol; 1,1,1 -trimethylolpropane; 1,1,1-trimethylolethane; hexane-1,2,6-triol; alpha-methyl glycoside; pentaerythritol; erythritol and sorbitol, as well as pentols and hexols. Sugars such as glucose, sucrose, fructose, maltose and the like and compounds derived from phenols such as (4,4'-hydroxyphenyl)2,2-propane; bisphenols; alkylphenols such as dodecylphenol, octylphenol, decylphenol and mixtures thereof and the like are also suitable for forming polyether polyols useful in the practice of the invention.

Amines suitable for reaction with alkylene oxides to form polyethers, include aliphatic and aromatic mono- and polyamines, optionally having substituents such as alkyl, carboxyl, carboalkoxy groups and the like. Exemplary aromatic amines include aniline, o-chloro-aniline, p-phenylene diamine, 1,5-diaminonaphthalene, methylene dianiline, the condensation products of aniline and formaldehyde, 2,4-diamino toluene, ethylene diamine, toluene diamine and the like. Exemplary aliphatic amines include methylamine, triisopropanolamine, isopropanolamine, diethanolamine, triethanolamine, ethylenediamine, 1,3-propylenediamine, 1,4-propylenediamine, 1,4-butylenediamine, mixtures thereof and the like.

Because the problem of alkylene oxide rearrangement becomes increasingly prevalent with increasing equivalent weight of the polyether, the process of this invention is of particular significance when the polyether has an average molecular weight of at least about 1000. The useful polyethers have an average of from about 1 to about 8, preferably -from about 2 to about 4, hydroxyl groups per molecule. The polyethers are preferably of relatively high molecular weight, having molecular weights ranging up to about 10,000 preferably about 1000 to about 8000. Especially preferred polyethers are polyoxypropylene glycols. The polyoxypropylene glycols may contain oxyethylene units. Polyethers having molecular weights of from 1000 to about 8000 are generally most preferred for preparing polyurethanes.

One or more catalysts are advantageously used in the preparation of the useful polyethers. Preferred catalysts include basic catalysts, more preferably hydroxides and alkoxides of alkali and alkaline earth metals, particularly cesium, sodium, potassium and lithium. When alkoxides are used as catalysts, the alkoxy groups advantageously contain from about one to about 36 carbon atoms.

### CONVERSION OF ALLYL TERMINAL UNSATURATION OF THE POLYETHERS TO PROPENYL UNSATURATION

A wide variety of isomerization catalysts may be employed in the process of this invention for converting the allyl terminal unsaturation of the starting polyether to propenyl unsaturation. One group of preferred isomerization catalysts includes basic catalysts as exemplified by alkali metal hydroxides, particularly cesium, sodium and potassium hydroxides. Other useful basic isomerization catalysts include, for example, potassium fluoride on alumina, magnesium oxide and hydrotalcite, such as KW-2000, a calcined synthetic hydrotalcite available from Kyowa Chemical Industry Co., Ltd. of Japan. Hydrotalcite KW-2000 has the formula:

Mg_{0.7}Al_{0.3}O_{0.85}

Transition metal compounds useful as isomerization catalysts include, for example, ruthenium (III) chloride, tris(triphenylphosphine) ruthenium (II) chloride, tris(triphenylphosphine) rhodium (I) chloride, ruthenium oxide hydrate, etc.

Sufficient catalyst is employed in this step of the process to provide for the conversion of a substantial amount, i.e., about 25 up to 100 percent, of the allyl terminal unsaturation to propenyl terminal unsaturation. The catalysts concentration employed is such that the reaction proceeds to the desired degree of completion in about 24 hours or less, preferably in about 8 hours or less. In general suitable amounts of the isomerization catalyst will range from about 0.10 to about 15, preferably about 0.10 to about 10 weight percent of catalyst based on the weight of the polyether.

The isomerization process of this invention is conducted at a temperature sufficient to achieve a convenient reaction rate. Generally the reaction temperature will range from about 80 to about 180°C with the preferred temperature being from 120 to about 170°C. Preferably, the isomerization reaction is conducted in a closed system at pressures of 0 to about 90 psig.

Diluents or solvents may be employed in the isomerization step where the polyether is, for example, a viscous material or to improve heat transfer. Useful solvents or diluents include methanol, ethanol, propanol, dioxane, tetrahydrofuran, etc. Preferably, the amount of solvent will range from about 1 to 10 times the weight of the polyether.

At the conclusion of the isomerization step the catalyst is removed from the polyether product having propenyl unsaturation, by any convenient physical method such as by liquid/liquid extraction, with adsorbents such as magnesium silicate, etc., or by filtration, centrifugation, decantation, etc., in the case of solid catalysts.

The isomerization step can be carried out batchwise or in continuous manner. For example, the polyether with a diluent or solvent, if utilized, can be continuously passed over a catalyst bed composed of a solid or supported catalyst.

### Removal of Propenyl Terminal Unsaturation

In the process of this invention the polyether product having propenyl terminal unsaturation recovered from the isomerization step as described above is contacted with an acid catalyst whereby 60 to 100 percent of the propenyl terminal unsaturation is removed and converted to propionaldehyde and the corresponding polyether having an additional hydroxyl group is obtained. In some cases the addition of water may be desired.

Suitable acid catalysts for use in the propenyl terminal unsaturation removal step of the process of this invention include solid acid catalysts as exemplified by zeolites, silica gel, Lewis acids, Bronsted acids, acidic clays, and aluminum phosphate.

Useful zeolites include acid zeolites especially those of moderate acidity having silica to alumina ratios of about 5:1 to about 100:1. Examples of suitable acid zeolites include Valfor® CBV 901-X16 Y zeolite and Valfor® CBV 780-X16 Y zeolite of the PQ Corp.

Acid catalysts of the Lewis acid type useful in this process include, for example, Group IIIA metal salts.

In this step of the process sufficient catalyst is utilized to provide for the removal of a substantial amount of the propenyl terminal unsaturation of the polyether in a reasonable time. Generally, the amount of the catalyst utilized is such that the desired degree of completion of the reaction is achieved in about 0.5 to about 24 hours. Usually about 0.2 to about 25 weight percent of the catalyst, based on the weight of the polyether product being treated, is used.

The reaction in this step in which the propenyl terminal unsaturation groups are removed from the polyether and converted to propionaldehyde and where simultaneously the corresponding polyether having an additional hydroxyl group results may, in some cases, be carried out in the presence of water. The amount of water employed may be varied over a wide range however, in one embodiment water may be present in at least a stoichiometric amount based on the amount of the propenyl terminal unsaturation removed from the polyether.

In this step the process is conducted at a temperature high enough to achieve a suitable reaction rate while at the same time avoiding any significant decomposition of the polyether. Usually the temperature employed will range from about 25 to about 180°C, preferably about 60 to about 120°C.

Solvents or diluents may be used in the process where the polyether is a viscous material or to improve heat transfer. Suitable solvents include methanol, ethanol, propanol, etc., with the amount employed being from about 1 to about 10 times the weight of the polyether.

The propenyl unsaturation removal step can be conducted batchwise or in a continuous manner. For example, the polyether together with the diluent or solvent, if employed, can be continuously passed through a column packed with a supported or solid catalyst in order to conduct the reaction.

As previously pointed out, this invention also relates to a process for preparing low unsaturation polyether polyols in which propylene oxide is reacted in the presence of a catalyst, such as cesium, sodium or potassium hydroxide, with an initiator, such as a polyoxypropylene glycol having a molecular weight of about 220 to 600 or more, to form a polyether polyol product having a molecular weight of about 1000 to about 5000. The resulting polyether product characterized by allyl terminal unsaturation and containing the catalyst is then heated at a temperature of about 110 to about 190°C for about 0.5 to about 24 hours whereby the allyl terminal unsaturation is reduced by conversion to propenyl terminal unsaturation. After removal of the catalyst by treatment with, for example, magnesium silicate followed by filtration, the polyol product is contacted with an acidic zeolite in the manner previously described to effect removal of from 60 to 100 percent of the propenyl terminal unsaturation.

Useful basic catalysts include cesium, sodium and potassium hydroxides. The amount of the basic catalyst which in this process also serves as the isomerization catalyst generally will range from about 0.5 to about 10 wt. percent based on the weight of the initiator compound.

Initiators suitable for use in the above described process generally will have molecular weights ranging from 18 to about 1000. Preferred initiators include ethylene glycol; 1,2-propylene glycol; 1,3-propylene glycol; the various isomers of butylene glycol, pentylene glycol, glycerine, trimethylolpropane, pentaerythritol, ethylenediamine and the polyoxyalkylene adducts thereof.

During the isomerization step, from about 25 to about 100 percent of the allyl terminal unsaturation is converted to propenyl terminal unsaturation. The time required for the desired conversion of the allyl terminal unsaturation to propenyl terminal unsaturation will depend on the particular catalyst employed, the concentration of the catalyst, the reaction temperature, whether a continuous or batch process is used and other factors.

In the propenyl terminal unsaturation removal step, diluents such as methanol, ethanol, propanol, etc., may be utilized, if desired. The time required for the removal of the desired amount of the propenyl terminal unsaturation will depend on the particular reaction conditions selected.

In the one-step process a polyether having at least one hydroxyl group and allyl and propenyl terminal unsaturation is contacted with a catalyst comprising a ruthenium compound supported, for example, on a zeolite or silica gel at a temperature of about 20 to about 190°C, and for a period of time ranging from 0.5 to about 24 hours whereby a polyether product essentially free of terminal unsaturation is produced. Useful catalysts include, for example, ruthenium (III) chloride, etc.

In this reaction the isomerization of the allyl terminal unsaturation of the polyether to propenyl terminal unsaturation and the removal of the propenyl terminal unsaturation occurs in a single operation.

In the in-situ process of this invention propylene oxide is reacted at a temperature of about 90 to about 150°C in the presence of a ruthenium catalyst, such as tris(triphenylphosphine) ruthenium (II) chloride, with a polyoxypropylene glycol initiator having a molecular weight of about 100 to about 1000 and containing about 0.5 to about 10 weight percent of potassium hydroxide, based on the weight of the initiator whereby a polyoxypropylene glycol free of terminal unsaturation is obtained.

The following examples which illustrate the nature of the instant invention are not intended to be limitative. It may be seen from Examples 2 through 8 that the single isomerization step can convert at least about 97 percent or more of the allyl terminal unsaturation to propenyl terminal unsaturation. In one embodiment of the invention, the single isomerization step can convert at least 90 percent or more of the allyl terminal unsaturation to propenyl terminal unsaturation; in another embodiment of the invention, the conversion is at least 95 percent or more.

For 0.058 M KOH catalyst per liter, the conversions of allylic termination to propenyl termination for various lengths of time at various reaction temperatures may be calculated. The initial allylic termination is 3 mole percent of the total end groups. This information is presented in Table A below, and in graphic form in FIG. 1. The results of Examples 7 and 8 are consistent with these calculations.

**TABLE A**

| **Conversions of Allylic Termination to Propenyl Termination** | | | | | |
|---|---|---|---|---|---|
| | Temperature (°C) | | | | |
| Time (hrs.) | 130.0 | 140.0 | 150.0 | 160.0 | 170.0 |
| 0 | 0.0% | 0.0% | 0.0% | 0.0% | 0.0% |
| 1 | 0.6% | 1.7% | 4.6% | 11.4% | 25.8% |
| 5 | 3.0% | 8.4% | 20.9% | 45.4% | 77.5% |
| 10 | 6.0% | 16.0% | 37.5% | 70.2% | 94.9% |
| 20 | 11.6% | 29.5 % | 60.9% | 91.1% | 99.7 % |
| 50 | 26.5% | 58.2% | 90.5% | 99.8 % | 100.0% |
| 100 | 46.0% | 82.5% | 99.1% | 100.0 % | 100.0% |
| 500 | 95.4 % | 100.0 % | 100.0% | 100.0 % | 100.0% |
| 1000 | 99.8 % | 100.0% | 100.0% | 100.0 % | 100.0% |

### EXAMPLE 1

### Preparation of a Monofunctional Polyether From Allyl Alcohol and Propylene Oxide (Polyether 7059-59)

To 3 lbs. (1.36 kg) allyl alcohol in a fully cooled nitrogen padded kettle was added 20 g of solid potassium hydroxide which had been ground to a powder. 17.7 lbs. (8.03 kg) of propylene oxide was added to the allyl alcohol by conventional techniques. The resulting polyether (7059-58) had the following properties:

| | |
|---|---|
| Hydroxyl no., mg KOH/g | 145 |
| Molecular weight, theoretical | 387 |

15 lbs. (6.8 kg) of 7059-58 and 346 g of 45 percent potassium hydroxide were charged to a nitrogen padded kettle and purged with nitrogen 15 minutes. The mixture was then dried with a nitrogen purge at 110°C to <0.05 percent water. Propylene oxide (60 lbs.; 27.22 kg) was added to the polyether, following which the reaction mass was neutralized with 302 g of 38 percent lactic acid. NMR analysis indicated that the product had 53 mol percent secondary hydroxyl termination, 39 mol percent allyl termination and 9 mol percent propenyl termination. The resulting polyether (7059-59) had the following properties:

| | |
|---|---|
| Hydroxyl no., mg. KOH/g | 37.1 |
| Molecular weight as determined by GPC analysis | 1608 |

### EXAMPLE 2

### Isomerization with Tris (triphenylphosphine) Ruthenium (II) Chloride Catalyst

12.09 g of polyether of Example 1 (7059-59), 0.12 g DABCO® , a triethylenediamine product of Air Products and Chemicals, Inc., 0.59 g tris (triphenylphosphine) ruthenium (II) chloride and 25 ml of 90 percent ethanol was heated under nitrogen purge at reflux temperature for 24 hours. The catalyst was removed by filtration and the solvent removed in a rotary evaporator. The product was then dissolved in methylene chloride, washed with 50 ml of 1 N hydrochloric acid and then with (2 x 50 ml) deionized water. The organic layer was separated, dried over sodium sulfate, decolorized with Norit® A, activated carbon of American Norit Co., Inc., filtered and the solvent removed in a rotary evaporator.

NMR analysis of the product (7121-6) showed 62 mol percent hydroxyl termination, 0 mole percent allyl termination, 35 mole percent propenyl termination and 3 mol percent propyl ether termination. Thus, all of the allyl terminal unsaturation of the polyether 7059-59 was isomerized to propenyl terminal unsaturation.

### EXAMPLE 3

### Isomerization with Ruthenium Chloride Catalyst

12.4 g of the polyether of Example 1 (7059-59, 39 mol percent allyl termination), 0.17 g DABCO® , 0.16 g ruthenium trichloride and 25 ml of 90 percent methanol was heated under nitrogen purge at reflux temperature for 24 hours. The catalyst was removed by filtration and the solvent removed in a rotary evaporator. The product was dissolved in methylene chloride, washed with 50 ml of 1 N hydrochloric acid and then with (2 x 50 ml) deionized water. The organic layer was separated, dried over sodium sulfate, decolorized with Norit® A activated carbon, filtered and the solvent removed from the product in a rotary evaporator.

NMR analysis of the product (7121-9) showed 56 mol percent secondary hydroxyl termination, 10 mol percent primary hydroxyl termination, 0 mol percent allyl termination and 34 mol percent propenyl termination. Thus, all of the allyl terminal unsaturation in the starting material was isomerized to propenyl terminal unsaturation. The primary hydroxyl termination was produced as a result of cleavage of propenyl terminal groups.

### EXAMPLE 4

### Isomerization with Silica Gel Supported Tris (triphenylphosphine) Ruthenium (II) Chloride Catalyst

2 g of tris (triphenylphosphine) ruthenium (II) chloride was dissolved in 50 ml methylene chloride and the solution added to a mixture of 200 g of 70-250 mesh silica gel slurried in methylene chloride. The methylene chloride was removed in a rotary evaporator to give a silica gel supported catalyst (7121-11). 150 g of the polyether of Example 1 (7059-59) and 32 g of the supported catalyst were combined and heated at 100°C under nitrogen with stirring for 72 hours.

NMR of the product (7121-11B) showed 56.1 percent secondary hydroxyl termination, 1 mol percent allyl termination and 43 mol percent propenyl termination. Thus, 97 percent of the allyl terminal unsaturation present in the starting polyether (7059-59, 39 mol percent allyl termination) was isomerized to propenyl terminal unsaturation.

### EXAMPLE 5

### Isomerization with Ruthenium Oxide Hydrate Catalyst

60.74 g of the polyether of Example 1 (7059-59, 39 mol percent allyl termination) and 1.24 g ruthenium oxide hydrate were combined in 100 ml of methanol and refluxed for 72 hours. The reaction mixture was treated with Norit® A activated carbon and filtered over Celite® filter aid, a diatomaceous earth product of Johns-Manville Products Corporation to remove the catalyst.

NMR analysis of the product (7121-17B) showed 54 mol percent secondary hydroxyl termination, 2 mol percent primary hydroxyl termination, 0 mol percent allyl termination and 38 mol percent propenyl termination. Thus, all of the allyl terminal unsaturation was isomerized to propenyl terminal unsaturation.

### EXAMPLE 6

### Isomerization with Tris (triphenylphosphine) Rhodium I Chloride

12.56 g of the polyether of Example 1 (39 mol percent allyl termination) and 650 mg tris (triphenyl-phosphine) rhodium (I) chloride were combined in 50 ml methanol and stirred 24 hours at 25°C. The reaction mass was filtered, dissolved in methylene chloride and washed with water. The organic layer was separated, dried over sodium sulfate, filtered and solvent removed in a rotary evaporator.

NMR analysis of the product (7121-20B) showed 43 mol percent secondary hydroxyl termination, 0 mole percent allyl termination, 36 mol percent propenyl termination and 6 mol percent propyl ether termination. Thus, all of the allyl terminal unsaturation of the starting material was either isomerized to propenyl terminal unsaturation or hydrogenated to propyl ether.

### EXAMPLE 7

### Isomerization with Potassium Hydroxide Catalyst

159.8 g of polyether of Example 1 (39 mol percent allyl unsaturation) and 9.1 g of potassium hydroxide were combined and stirred under argon for 24 hours at 160°C ±5°C. The basic polyether product was then cooled to ambient temperature, neutralized with 1 M aqueous hydrochloric acid and the product was removed from the resulting aqueous layer by liquid/liquid extraction with methylene chloride solvent. The organic phase was dried over sodium sulfate, filtered and the solvent removed from the product in a rotary evaporator.

NMR analysis of the product (7121-22) showed 50 mol percent secondary hydroxyl termination, 25 mol percent primary hydroxyl termination, 0 mol percent allyl termination and 25 mol percent propenyl termination. Thus, all of the allyl terminal unsaturation of the starting polyether was isomerized to propenyl terminal unsaturation. The primary hydroxyl terminated material was formed by partial removal of the propenyl unsaturation during the product recovery steps.

GPC analysis of product 7121-22 indicated a peak molecular weight of 1652, Mn of 1425 and Mw of 1733 while GPC analysis of the starting material 7059-59 indicated a peak molecular weight of 1651, Mn of 1264 and Mw of 1608. These values show that degradation of the polyether did not occur.

### EXAMPLE 8

### Isomerization with Potassium Hydroxide Catalyst

To 152.29 g of polyether of Example 1 (7059-59, 39 mol percent allyl termination) was added 0.63 g solid potassium hydroxide. The mixture was purged with argon at ambient temperature and then heated to 160°C for 48 hours with stirring under argon. The product was recovered from the reaction mixture using the same procedure as described in Example 7.

NMR analysis of the product (7121-24) showed 54 mol percent secondary hydroxyl termination, 9 mol percent primary hydroxyl termination, 1 mol percent allyl termination and 36 mol percent propenyl termination. Thus, 97 percent of the allyl terminal unsaturation of the starting polyether was isomerized to propenyl terminal unsaturation. The primary hydroxyl terminated material resulted from hydrolysis of propenyl terminal groups during the product recovery steps.

### EXAMPLE 9

### Isomerization with Potassium Hydroxide Catalyst

To 151.60 g of polyether 7059-59 was added 0.25 g solid potassium hydroxide. The mixture was purged with argon at 25°C for 45 minutes and then heated at 160°C for 72 hours with stirring. The catalyst was extracted from the mixture with aqueous hydrochloric acid following which the mixture was washed with aqueous sodium bicarbonate. The organic layer was separated and dissolved in 100 ml of methylene chloride, dried over sodium sulfate, filtered and the solvent removed from the product in a rotary evaporator.

NMR analysis of the product (7121-28) showed 53 mol percent secondary hydroxyl termination, 17 mol percent allyl termination, 11 mol percent propenyl termination and 19 mol percent primary hydroxy termination. Thus, the allyl terminal unsaturation was reduced from 39 mol percent in the starting polyether to 17 mol percent.

### EXAMPLE 10

### Isomerization with Cesium Hydroxide Catalyst

150.6 g of polyether of Example 1 (7059-59) and 1.34 g of 50 percent aqueous cesium hydroxide were combined, purged with argon for 30 minutes, heated to 160°C under argon with stirring for 4 hours 10 minutes.

NMR analysis of the product (7121-44) showed 22 mol percent allyl and 26 mol percent propenyl termination. Thus, the allyl terminal unsaturation in the starting polyether (7059-59) was reduced from 39 mol percent to 22 mol percent.

### EXAMPLE 11

### Continuous Isomerization Reaction with Magnesium Oxide Catalyst

TEXOX® 2000, a 2000 molecular weight polyoxypropylene glycol sold by the Huntsman Corporation was passed over granular magnesium oxide in a 100 cc reactor at a space velocity of 0.14 cc feed/cc catalyst/hr. and at temperatures of 140, 160, 180 and 200°C. The feed material contained 0.051 meq/g of allyl unsaturation. The effluent streams of these continuous runs were calculated for allyl unsaturation by difference in total unsaturation and propenyl unsaturation and the results are presented in Table I below:

**TABLE I**

| **Allyl Unsaturation Levels After Single Pass Through Reactor** | | | | | |
|---|---|---|---|---|---|
| **Sample** | **Space Velocity (cc feed/cc catalyst/hr)** | **Temp. (°C)** | **Total Unsaturation (meq/g)** | **Propenyl Unsaturation (meq/g)** | **Allyl Unsaturation Level (meq/g)** |
| 7121-86-1 | 0.14 | 140 | 0.053 | 0.012 | 0.041 |
| 7121-86-2 | 0.14 | 160 | 0.050 | 0.009 | 0.041 |
| 7121-86-3 | 0.14 | 180 | 0.036 | Not as detected | 0.036 |
| 7121-86-4 | 0.14 | 200 | 0.027 | Not as detected | 0.027 |

These results show both isomerization of the allyl groups to propenyl groups and removal of the propenyl groups by the catalyst.

### EXAMPLE 12

### Continuous Isomerization Reaction with Hydrotalcite Catalyst

TEXOX® 2000, a 2000 molecular weight polyoxypropylene glycol sold by the Huntsman Corporation was passed over KW-2000, a calcined synthetic hydrotalcite of the Kyowa Chemical Industry Co., Ltd. of Japan, in a 100 cc reactor at a space velocity of 0.14 cc feed/ cc catalyst/hr. and at temperatures of 160, 180, 200, 220 and 240°C. The feed material contained 0.050 meq/g of allyl unsaturation. The effluent streams of these continuous runs were analyzed by IR and NMR and the results are presented in Table II below:

**TABLE II**

| **Allyl Unsaturation Levels After Single Pass Through Reactor** | | | | | |
|---|---|---|---|---|---|
| **Sample** | **Space Velocity (cc feed/cc catalyst/hr)** | **Temp. (°C)** | **Total Unsaturation (meq/g)** | **Propenyl Unsaturation (meq/g)** | **Allyl Unsaturation (meq/g)** |
| 7121-85-1 | 0.14 | 160 | 0.050 | 0.012 | 0.038 |
| 7121-85-2 | 0.14 | 180 | 0.036 | 0.014 | 0.022 |
| 7121-85-3 | 0.14 | 200 | 0.027 | 0.008 | 0.019 |
| 7121-85-4 | 0.14 | 220 | 0.018 | 0.007 | 0.011 |
| 7121-85-5 | 0.14 | 240 | 0.014 | 0.003 | 0.011 |

These results show both isomerization of the allyl group to propenyl groups and removal of the propenyl groups by the catalyst.

### EXAMPLE 13

### Preparation of a Polyoxypropylene Glycol with Reduced Allyl Unsaturation

4 lbs. (1.81 kg) of TEXOX® 400, a polyoxypropylene glycol having a molecular weight of 400 sold by the Huntsman Corporation and 120 g of 45 wt. percent aqueous potassium hydroxide were charged to a nitrogen padded reactor. The TEXOX® 400 was dried to <0.05 wt. percent water and then 16 lbs. (7.26 kg) of propylene oxide was added semi-continuously at 50 psig reactor pressure and at 150°C following which the reaction was allowed to continue until the reactor pressure had dropped to ≤5 psig.

NMR analysis of this polyoxypropylene glycol product showed 91.8 mol percent secondary hydroxyl termination, 5.4 mol percent allyl termination and 2.8 mol percent propenyl termination.

The reactor was then heated to 160°C and the glycol product maintained at that temperature under nitrogen with mixing for 8 hours.

NMR of the final polyoxypropylene glycol product showed 91.2 mol percent secondary hydroxyl termination, <1 mol percent allyl termination and 8.8 mol percent propenyl termination.

### EXAMPLE 14

### Allyl Unsaturation Reduction in a Polyoxypropylene Glycol Product

79.5 lbs. (36.06 kg) of TEXOX® 2000, a polyoxypropylene glycol of 2000 molecular weight (96 mol percent secondary hydroxyl termination, ≤4 mol percent allyl termination and with no propenyl termination) sold by the Huntsman Corporation and 477 g of 45 percent aqueous potassium hydroxide were charged to a nitrogen padded reactor and dried to <0.05 wt. percent water. The mixture was heated at 160°C for 8 hours and the catalyst removed with an absorbent.

NMR analysis of the recovered product showed 3.2 mol percent propenyl termination and NMR showed no detectable allyl termination. Thus, all of the allyl terminal unsaturation was isomerized to propenyl terminal unsaturation.

### EXAMPLE 15

### Batchwise Removal of Propenyl Unsaturation with Acidic Zeolite Catalyst

81.15 g of polyol product 7121-8 (58 mol percent secondary hydroxyl termination, 3 mol percent primary hydroxyl termination, 25 mol percent allyl termination and 15 mol percent propenyl termination), 16.29 g of Valfor CBV 901-X16 Y zeolite of PQ Corp., 5.62 g of water and 50 ml methanol were combined and stirred at 25°C for 4 hours. The zeolite was removed by filtration and the solvent removed in a rotary evaporator.

NMR analyses of the product 7121-17A showed 54 mol percent secondary hydroxyl termination, 21 mol percent primary hydroxyl termination, 25 mol percent allyl termination, and 0 mol percent propenyl termination. Thus, all of the propenyl terminal unsaturation was removed from the starting material by the zeolite.

### EXAMPLE 16

### Batchwise Propenyl Unsaturation Removal with Indium (III) Chloride Tetrahydrate Catalyst

51.9 g of the polyether of Example 1 (39 mol percent allyl termination and 9 mol percent propenyl termination) and 0.88 g of indium (III) chloride tetrahydrate were dissolved in 100 ml methanol and refluxed for 72 hours. 100 ml of methylene chloride was added to the reaction mixture and the mixture washed with 2 x 80 ml water. The resulting organic layer was dried over sodium sulfate, filtered and the solvent removed in a rotary evaporator.

NMR analysis of the product (7121-15A) showed 53 mol percent secondary hydroxyl termination, 9 mol percent primary hydroxyl termination, 38 mol percent allyl termination and 0 mol percent propenyl termination. Thus, all of the propenyl terminal unsaturation of the product was removed from the starting material by the indium (III) chloride tetrahydrate catalyst.

### EXAMPLE 17

### Continuous Removal of Propenyl Unsaturation

The polyoxypropylene glycol product of Example 13 (0.032 meq/g mol percent propenyl termination) was passed over Valfor CBV 780-X16 Y zeolite catalyst in a 100 cc reactor at space velocities of 0.14, 0.7 and 1.4 g feed/100 cc catalyst/hr. and at temperatures as shown in Table III. The feed material contained 0.039 meq/g unsaturation, at least 0.032 meq/g of which was propenyl unsaturation. The effluent streams of these continuous runs were analyzed by IR and the results are presented in Table III.

**TABLE III**

| **Unsaturation Levels (meq/g) After Single Pass Through Reactor** | | | |
|---|---|---|---|
| **Sample** | **Space Velocity** **cc feed/100 cc Catalyst** | **Temperature (°C)** | **Propenyl Unsaturation** **Level (meq/g)** |
| 7121-53-5 | 0.14 | 40 | 0.022 |
| 7121-53-4 | 0.14 | 60 | 0.04 |
| 7121-53-3 | 0.14 | 80 | Not detected |
| 7121-53-2 | 0.14 | 100 | Not detected |
| 7121-53-1 | 0.14 | 120 | Not detected |
| | | | |
| 7121-68-1 | 0.7 | 40 | 0.025 |
| 7121-68-2 | 0.7 | 60 | 0.022 |
| 7121-68-3 | 0.7 | 80 | 0.016 |
| 7121-68-4 | 0.7 | 100 | 0.011 |
| 7121-68-5 | 0.7 | 120 | 0.009 |
| 7121-68-6 | 0.7 | 140 | Not detected |
| 7121-68-7 | 0.7 | 160 | Not detected |
| | | | |
| 7121-67-1 | 1.4 | 120 | 0.005 |
| 7121-67-2 | 1.4 | 140 | Not detected |
| 7121-67-3 | 1.4 | 160 | Not detected |

These data indicate that in every case the total unsaturation was reduced.

### EXAMPLE 18

### One Step Isomerization and Propenyl Unsaturation Removal

150 g of 70-230 mesh silica gel was added to 5 g of ruthenium (III) chloride dissolved in 250 ml deionized water and the mixture slurried for 30 minutes. The water was removed in a rotary evaporator to give a silica gel supported catalyst. 100 g of the polyether of Example 1 (39 mol percent allyl termination and 9 mol percent propenyl termination) and 32 g of the silica gel supported catalyst were combined and heated under nitrogen at 110°C with stirring for 24 hours after which the catalyst was removed by filtration.

NMR analysis of the recovered product showed 54 mol percent secondary hydroxyl termination and 1 mol percent allyl termination. Thus, 97 percent of the allyl terminal unsaturation and 100 percent of the propenyl terminal unsaturation was removed from the starting material in a single batchwise reaction.

### EXAMPLE 19

### In Situ Preparation of Low Unsaturation Polyoxypropylene Glycol

A nitrogen padded reactor was charged with 4 lbs. (1.81 kg) TEXOX® 400, a polyoxypropylene glycol containing catalytic potassium hydroxide and having a molecular weight of 400 sold by the Huntsman Corporation, which was dried to <0.05 wt. percent water. 5 g of tris (triphenylphosphine) ruthenium (II) chloride was added to the reactor after which 16 lbs. (7.26 kg) of propylene oxide was added semi-continuously at 50 psig and 115°. The reaction mass was then treated with an absorbent to remove the catalyst.

NMR analysis of the recovered product 7059-97 showed no detectable allyl or propenyl termination. Only secondary hydroxyl termination was observed.

## Claims

1. A process for preparing a polyether having reduced terminal unsaturation comprising
(1) contacting a polyether having at least one hydroxyl group and allyl terminal unsaturation with an isomerization catalyst whereby the allyl terminal unsaturation of the polyether is reduced by conversion to propenyl terminal unsaturation, where the amount of conversion is at least 90 percent in one step,
(2) removing the catalyst from the polyether product of step (1) and
(3) contacting the polyether product of step (2) with an acid catalyst whereby from 60 to 100 percent of the propenyl terminal unsaturation is removed and the corresponding polyether having an additional hydroxyl group is obtained.

2. The process of Claim 1 wherein the polyether having allyl terminal unsaturation further contains propenyl terminal unsaturation.

3. The process of Claim 1 wherein the polyether contains at least 50 weight percent of oxypropylene units derived from propylene oxide.

4. The process of Claim 1 wherein the polyether is a polyether polyol.

5. The process of Claim 4 wherein the polyol is a polyoxypropylene glycol.

6. The process of Claim 1 wherein the catalyst in step (1) is contacted with the polyether at a temperature of about 80 to about 180°C and for a period of about 1 to about 24 hours.

7. The process of Claim 1 wherein the isomerization catalyst of step (1) is selected from the group consisting of hydroxides of cesium, sodium and potassium.

8. The process of Claim 7 wherein the isomerization catalyst is potassium hydroxide.

9. The process of Claim 1 wherein the isomerization catalyst of step (1) is magnesium oxide.

10. The process of Claim 1 wherein the isomerization catalyst of step (1) is hydrotalcite of the formula:
Mg_{0.7}Al_{0.3}O_{0.85}

11. The process of Claim 1 wherein the isomerization catalyst of step (1) is selected from the group consisting of ruthenium (III) chloride, tris (triphenylphosphine) ruthenium (II) chloride, tris (triphenylphosphine rhodium) (I) chloride and ruthenium oxide hydrate.

12. The process of Claim 1 wherein the catalyst in step (1) is present in an amount of about 0.10 to about 10 weight percent based on the weight of the polyether.

13. The process of Claim 1 wherein in Step (1) the polyether is contacted in a continuous process with the isomerization catalyst.

14. The process of Claim 1 wherein the acid catalyst is contacted with the polyether product in step (3) at a temperature of about 25 to about 180°C and for a period of about 1 to about 24 hours.

15. The process of Claim 1 wherein the acid catalyst is an acidic zeolite.

16. The process of Claim 1 wherein the acid catalyst is a Lewis acid selected from the group consisting of Group IIIA metal halides or salts.

17. The process of Claim 1 wherein the acid catalyst in step (3) is present in an amount of about 0.2 to about 25 weight percent based on the weight of the polyether product.

18. The process of Claim 1 wherein in step (3) the polyether is contacted in a continuous process with the acidic catalyst.

19. A process for preparing a polyether polyol having reduced terminal unsaturation comprising
(1) reacting propylene oxide with an initiator having at least two hydroxyl groups in the presence of a basic catalyst at a temperature of about 90 to about 150°C, at least a portion of the resulting polyether polyol being **characterized by** having allyl terminal unsaturation,
(2) heating the polyether polyol of step (1) containing the basic catalyst at a temperature of about 110 to about 190°C whereby the allyl terminal unsaturation is reduced by conversion to propenyl terminal unsaturation, where the amount of conversion is at least 90 percent in one step,
(3) removing the basic catalyst from the polyether polyol product of step (2), and
(4) contacting the polyether polyol product of step (3) with an acidic zeolite whereby from 60 to 100 percent of the propenyl terminal unsaturation is removed and the corresponding polyether polyol is obtained.

20. The process of Claim 19 wherein the polyether polyol having allyl terminal unsaturation further contains propenyl terminal unsaturation.

21. The process of Claim 19 wherein the initiator is a polyoxypropylene glycol having a molecular weight of about 200 to about 1000.

22. The process of Claim 19 wherein the initiator is a polyoxypropylene glycol having a molecular weight of 400.

23. The process of Claim 19 wherein the basic catalyst of step (1) is selected from the group consisting of hydroxides of cesium, sodium and potassium.

24. The process of Claim 19 wherein the basic catalyst is potassium hydroxide.

25. The process of Claim 19 wherein the catalyst in step (1) is present in an amount of about 0.5 to about 10 weight percent based on the weight of the initiator.

26. The process of Claim 19 wherein in step (1) the catalyst is potassium hydroxide and the initiator is a polyoxypropylene glycol having a molecular weight of about 200 to about 600.

27. The process of Claim 19 wherein in step (2) the polyether polyol containing the basic catalyst is heated for about 0.5 to about 24 hours.

28. The process of Claim 19 wherein the acidic zeolite in step (4) is present in an amount of about 0.2 to about 25 weight percent based on the weigh of the polyether polyol product.

29. The process of Claim 19 where in step 4 the polyether polyol is contacted continuously with the acidic zeolite.

30. A process for preparing a polyether polyol having reduced terminal unsaturation comprising
(1) heating a mixture containing a polyether polyol having allyl terminal unsaturation and an isomerization catalyst whereby the allyl terminal unsaturation of the polyether is reduced by conversion to propenyl terminal unsaturation, where the amount of conversion is at least 90 percent in one step,
(2) removing the catalyst from the polyether polyol of step (1) and
(3) contacting the polyether polyol of step (2) with an acidic zeolite whereby from 60 to 100 percent of the propenyl terminal unsaturation of the polyether polyol is removed and the corresponding polyether polyol having an additional hydroxyl group is obtained.

31. The process of Claim 30 wherein the polyether further contains propenyl terminal unsaturation.

32. The process of Claim 30 wherein the polyether is a polyoxypropylene glycol.

33. The process of Claim 30 wherein the mixture is heated at a temperature of about 80 to about 180°C and for a period of about 1 to about 24 hours.

34. The process of Claim 30 wherein the isomerization catalyst of step (1) is selected from the group consisting of hydroxides of cesium, sodium and potassium.

35. The process of Claim 30 wherein the isomerization catalyst is potassium hydroxide.

36. The process of Claim 30 wherein in step (1) the isomerization catalyst is present in the mixture in an amount of about 0.10 to about 15 weight percent based on the weight of the polyether polyol.

37. The process of Claim 30 wherein the acidic zeolite is contacted with the polyether polyol product in step (3) at a temperature of about 25 to about 180°C.

38. The process of Claim 30 wherein the acidic zeolite in step (3) is present in an amount of about 0.2 to about 25 weight percent based on the weight of the polyether polyol.

39. A process for preparing a polyether comprising contacting a polyether having at least one hydroxyl group and allyl and propenyl terminal unsaturation with a catalyst comprising a ruthenium compound supported on silica gel at a temperature of about 20 to about 190°C and for a period of about 0.5 to about 24 hours whereby a polyether product essentially free of allyl and propenyl unsaturation is obtained.

40. The process of Claim 39 wherein the ruthenium compound is ruthenium (III) chloride.

41. A process for preparing a polyether polyol comprising reacting propylene oxide in the presence of tris (triphenylphosphine) ruthenium (II) chloride with a polyoxypropylene glycol initiator having a molecular weight of about 100 to about 10000 and containing about 0.5 to about 10 weight percent of potassium hydroxide, based on the weight of polyoxypropylene glycol initiator, whereby a polyoxypropylene glycol product free of terminal unsaturation is obtained.

42. The process of Claim 41 wherein the propylene glycol is reacted with the polyoxypropylene glycol at a temperature of about 90 to about 150°C.

43. The process of Claim 41 wherein the tris (triphenylphosphine) ruthenium (II) chloride is present in an amount of about 0.1 to about 1.00 weight percent based on the weight of the initiator.

44. A process for preparing a polyether having reduced terminal unsaturation comprising
(1) contacting a polyether having at least one hydroxyl group and allyl terminal unsaturation with an isomerization catalyst selected from the group consisting of the hydroxides of cesium, sodium and potassium at a temperature of about 80 to about 180° C and for a period of about 1 to about 24 hours whereby the allyl terminal unsaturation of the polyether is reduced by conversion to propenyl terminal unsaturation, where the amount of conversion is at least 90 percent in one step,
(2) physically removing the catalyst from the polyether product of step (1) and
(3) contacting the polyether product of step (2) with an acidic zeolite at a temperature of about 25 to about 180° C and for a period of about 1 to about 24 hours whereby from 60 to 100 percent of the propenyl terminal unsaturation is removed and the corresponding polyether having an additional hydroxyl group is obtained.

## Patentansprüche

1. Verfahren zur Herstellung eines Polyethers mit verringerter terminaler Ungesättigtheit, welches umfaßt
(1) Inkontaktbringen eines Polyethers mit wenigstens einer Hydroxylgruppe und terminaler Allyl-Ungesättigtheit mit einem Isomerisationskatalysator, wodurch die terminale Allyl-Ungesättigtheit des Polyethers durch Umwandlung in terminale Propenyl-Ungesättigtheit verringert wird, wobei der Umfang der Umwandlung wenigstens 90 % in einem Schritt beträgt,
(2) Entfernen des Katalysators vom Polyetherprodukt von Schritt (1) und
(3) Inkontaktbringen des Polyetherproduktes von Schritt (2) mit einem sauren Katalysator, wodurch von 60 bis 100 % der terminalen Propenyl-Ungesättigtheit entfernt werden und der entsprechende Polyether mit einer zusätzlichen Hydroxylgruppe erhalten wird.

2. Verfahren nach Anspruch 1, **dadurch gekennzeichnet, daß** der Polyether mit terminaler Allyl-Ungesättigtheit außerdem terminale Propenyl-Ungesättigtheit enthält.

3. Verfahren nach Anspruch 1, **dadurch gekennzeichnet, daß** der Polyether wenigstens 50 Gew.-% Oxypropylen-Einheiten enthält, die von Propylenoxid abgeleitet sind.

4. Verfahren nach Anspruch 1, **dadurch gekennzeichnet, daß** der Polyether ein Polyetherpolyol ist.

5. Verfahren nach Anspruch 4, **dadurch gekennzeichnet, daß** das Polyol ein Polyoxypropylenglykol ist.

6. Verfahren nach Anspruch 1, **dadurch gekennzeichnet, daß** der Katalysator in Schritt (1) mit dem Polyether bei einer Temperatur von etwa 80 bis etwa 180°C und für einen Zeitraum von etwa 1 bis etwa 24 Stunden in Kontakt gebracht wird.

7. Verfahren nach Anspruch 1, **dadurch gekennzeichnet, daß** der Isomerisationskatalysator von Schritt (1) ausgewählt wird aus der Gruppe, die aus Hydroxiden von Cäsium, Natrium und Kalium besteht.

8. Verfahren nach Anspruch 7, **dadurch gekennzeichnet, daß** der Isomerisationskatalysator Kaliumhydroxid ist.

9. Verfahren nach Anspruch 1, **dadurch gekennzeichnet, daß** der Isomerisationskatalysator von Schritt (1) Magnesiumoxid ist.

10. Verfahren nach Anspruch 1, **dadurch gekennzeichnet, daß** der Isomerisationskatalysator von Schritt (1) Hydrotalcit der Formel:
Mg_{0,7}Al_{0,3}O_{0,85}
ist.

11. Verfahren nach Anspruch 1, **dadurch gekennzeichnet, daß** der Isomerisationskatalysator von Schritt (1) ausgewählt wird aus der Gruppe, die aus Ruthenium(III)-chlorid, Tris(triphenylphosphin)ruthenium(II)-chlorid, Tris(triphenylphosphin)rhodium(I)-Chlorid und Rutheniumoxid-Hydrat besteht.

12. Verfahren nach Anspruch 1, **dadurch gekennzeichnet, daß** der Katalysator in Schritt (1) in einer Menge von etwa 0,10 bis etwa 10 Gew.-%, bezogen auf das Gewicht des Polyethers, vorliegt.

13. Verfahren nach Anspruch 1, **dadurch gekennzeichnet, daß** in Schritt (1) der Polyether in einem kontinuierlichen Verfahren mit dem Isomerisationskatalysator in Kontakt gebracht wird.

14. Verfahren nach Anspruch 1, **dadurch gekennzeichnet, daß** der saure Katalysator mit dem Polyetherprodukt in Schritt (3) bei einer Temperatur von etwa 25 bis etwa 180°C und für einen Zeitraum von etwa 1 bis etwa 24 Stunden in Kontakt gebracht wird.

15. Verfahren nach Anspruch 1, **dadurch gekennzeichnet, daß** der saure Katalysator ein saurer Zeolith ist.

16. Verfahren nach Anspruch 1, **dadurch gekennzeichnet, daß** der saure Katalysator eine Lewis-Säure ist, die ausgewählt ist aus der Gruppe, die aus GruppeIIIA-Metallhalogeniden oder -salzen besteht.

17. Verfahren nach Anspruch 1, **dadurch gekennzeichnet, daß** der saure Katalysator in Schritt (3) in einer Menge von etwa 0,2 bis etwa 25 Gew.-%, bezogen auf das Gewicht des Polyetherproduktes, vorliegt.

18. Verfahren nach Anspruch 1, **dadurch gekennzeichnet, daß** in Schritt (3) der Polyether in einem kontinierlichen Verfahren mit dem sauren Katalysator in Kontakt gebracht wird.

19. Verfahren zur Herstellung eines Polyetherpolyols mit verringerter terminaler Ungesättigtheit, welches umfaßt
(1) Umsetzen von Propylenoxid mit einem Initiator mit wenigstens zwei Hydroxylgruppen in der Gegenwart eines basischen Katalysators bei einer Temperatur von etwa 90 bis etwa 150°C, wobei wenigstens ein Teil des resultierenden Polyetherpolyols **dadurch gekennzeichnet ist, daß** es terminale Allyl-Ungesättigtheit aufweist,
(2) Erhitzen des Polyetherpolyols von Schritt (1), das den basischen Katalysator enthält, bei einer Temperatur von etwa 110 bis etwa 190°C, wodurch die terminale Allyl-Ungesättigtheit durch Umwandlung in terminale Propenyl-Ungesättigtheit verringert wird, wobei der Umfang der Umwandlung wenigstens 90 % in einem Schritt beträgt,
(3) Entfernen des basischen Katalysators vom Polyetherpolyolprodukt von Schritt (2) und
(4) Inkontaktbringen des Polyetherpolyolproduktes von Schritt (3) mit einem sauren Zeolith, wodurch von 60 bis 100 % der terminalen Propenyl-Ungesättigtheit entfernt werden und das entsprechende Polyetherpolyol erhalten wird.

20. Verfahren nach Anspruch 19, **dadurch gekennzeichnet, daß** das Polyetherpolyol mit terminaler Allyl-Ungesättigtheit außerdem terminale Propenyl-Ungesättigtheit enthält.

21. Verfahren nach Anspruch 19, **dadurch gekennzeichnet, daß** der Initiator ein Polyoxypropylenglykol mit einem Molekulargewicht von etwa 200 bis etwa 1.000 ist.

22. Verfahren nach Anspruch 19, **dadurch gekennzeichnet, daß** der Initiator ein Polyoxypropylenglykol mit einem Molekulargewicht von 400 ist.

23. Verfahren nach Anspruch 19, **dadurch gekennzeichnet, daß** der basische Katalysator von Schritt (1) ausgewählt wird aus der Gruppe, die aus Hydroxiden von Cäsium, Natrium und Kalium besteht.

24. Verfahren nach Anspruch 19, **dadurch gekennzeichnet, daß** der basische Katalysator Kaliumhydroxid ist.

25. Verfahren nach Anspruch 19, **dadurch gekennzeichnet, daß** der Katalysator in Schritt (1) in einer Menge von etwa 0,5 bis etwa 10 Gew.-%, bezogen auf das Gewicht des Initiators, vorliegt.

26. Verfahren nach Anspruch 19, **dadurch gekennzeichnet, daß** in Schritt (1) der Katalysator Kaliumhydroxid ist und der Initiator ein Polyoxypropylenglykol mit einem Molekulargewicht von etwa 200 bis etwa 600 ist.

27. Verfahren nach Anspruch 19, **dadurch gekennzeichnet, daß** in Schritt (2) das Polyetherpolyol, das den basischen Katalysator enthält, für etwa 0,5 bis etwa 24 Stunden erhitzt wird.

28. Verfahren nach Anspruch 19, **dadurch gekennzeichnet, daß** der saure Zeolith in Schritt (4) in einer Menge von etwa 0,2 bis etwa 25 Gew.-%, bezogen auf das Gewicht des Polyetherpolyolproduktes, vorliegt.

29. Verfahren nach Anspruch 19, **dadurch gekennzeichnet, daß** in Schritt (4) das Polyetherpolyol kontinuierlich mit dem sauren Zeolith in Kontakt gebracht wird.

30. Verfahren zur Herstellung eines Polyetherpolyols mit verringerter terminaler Ungesättigtheit, welches umfaßt
(1) Erhitzen einer Mischung, die ein Polyetherpolyol mit terminaler Allyl-Ungesättigtheit und einen Isomerisationskatalysator enthält, wodurch die terminale Allyl-Ungesättigtheit des Polyethers durch Umwandlung in terminale PropenylUngesättigtheit verringert wird, wobei der Umfang der Umwandlung wenigstens 90 % in einem Schritt beträgt,
(2) Entfernen des Katalysators vom Polyetherpolyol von Schritt (1) und
(3) Inkontaktbringen des Polyetherpolyols von Schritt (2) mit einem sauren Zeolith, wodurch von 60 bis 100 % der terminalen Propenyl-Ungesättigtheit des Polyetherpolyols entfernt werden und das entsprechende Polyetherpolyol mit einer zusätzlichen Hydroxylgruppe erhalten wird.

31. Verfahren nach Anspruch 30, **dadurch gekennzeichnet, daß** der Polyether außerdem terminale Propenyl-Ungesättigtheit enthält.

32. Verfahren nach Anspruch 30, **dadurch gekennzeichnet**; daß der Polyether ein Polyoxypropylenglykol ist.

33. Verfahren nach Anspruch 30, **dadurch gekennzeichnet, daß**. die Mischung bei einer Temperatur von etwa 80 bis etwa 180°C und für einen Zeitraum von etwa 1 bis etwa 24 Stunden erhitzt wird.

34. Verfahren nach Anspruch 30, **dadurch gekennzeichnet, daß** der Isomerisationskatalysator von Schritt (1) ausgewählt wird aus der Gruppe, die aus Hydroxiden von Cäsium, Natrium und Kalium besteht.

35. Verfahren nach Anspruch 30, **dadurch gekennzeichnet, daß** der Isomerisationskatalysator Kaliumhydroxid ist.

36. Verfahren nach Anspruch 30, **dadurch gekennzeichnet, daß** in Schritt (1) der Isomerisationskatalysator in der Mischung in einer Menge von etwa 0,10 bis etwa 15 Gew.-%, bezogen auf das Gewicht des Polyetherpolyols, vorliegt.

37. Verfahren nach Anspruch 30, **dadurch gekennzeichnet, daß** der saure Zeolith mit dem Polyetherpolyolprodukt in Schritt (3) bei einer Temperatur von etwa 25 bis etwa 180°C in Kontakt gebracht wird.

38. Verfahren nach Anspruch 30, **dadurch gekennzeichnet, daß** der saure Zeolith in Schritt (3) in einer Menge von etwa 0,2 bis etwa 25 Gew.-%, bezogen auf das Gewicht des Polyetherpolyols, vorliegt.

39. Verfahren zur Herstellung eines Polyethers, welches das Inkontaktbringen eines Polyethers mit wenigstens einer Hydroxylgruppe und terminaler Allyl- und Propenyl-Ungesättigtheit mit einem Katalysator, der eine Rutheniumverbindung auf einem Silicagel-Träger umfaßt, bei einer Temperatur von etwa 20 bis etwa 190°C und für einen Zeitraum von etwa 0,5 bis etwa 24 Stunden umfaßt, wodurch ein im wesentlichen von Allyl- und Propenyl-Ungesättigtheit freies Polyetherprodukt erhalten wird.

40. Verfahren nach Anspruch 39, **dadurch gekennzeichnet, daß** die Rutheniumverbindung Ruthenium(III)-chlorid ist.

41. Verfahren zur Herstellung eines Polyetherpolyols, welches das Umsetzen von Propylenoxid in der Gegenwart von Tris(triphenylphosphin)ruthenium(II)-chlorid mit einem Polyoxypropylenglykol-Initiator mit einem Molekulargewicht von etwa 100 bis etwa 10.000 und etwa 0,5 bis etwa 10 Gew.-% Kaliumhydroxid, bezogen auf das Gewicht des Polyoxypropylenglykol-Initiators, enthaltend umfaßt, wodurch ein Polyoxypropylenglykolprodukt erhalten wird, das frei von terminaler Ungesättigtheit ist.

42. Verfahren nach Anspruch 41, **dadurch gekennzeichnet, daß** das Propylenglykol mit dem Polyoxypropylenglykol bei einer Temperatur von etwa 90 bis etwa 150°C umgesetzt wird.

43. Verfahren nach Anspruch 41, **dadurch gekennzeichnet, daß** das Tris(triphenylphosphin)ruthenium(II)-chlorid in einer Menge von etwa 0,1 bis etwa 1,00 Gew.-%, bezogen auf das Gewicht des Initiators, vorliegt.

44. Verfahren zur Herstellung eines Polyethers mit verringerter terminaler Ungesättigtheit, welches umfaßt
(1) Inkontaktbringen eines Polyethers mit wenigstens einer Hydroxylgruppe und terminaler Allyl-Ungesättigtheit mit einem Isomerisationskatalysator, der ausgewählt ist aus der Gruppe, die aus den Hydroxiden von Cäsium, Natrium und Kalium besteht, bei einer Temperatur von etwa 80 bis etwa 180°C und für einen Zeitraum von etwa 1 bis etwa 24 Stunden, wodurch die terminale Allyl-Ungesättigtheit des Polyethers durch Umwandlung in terminale Propenyl-Ungesättigtheit verringert wird, wobei der Umfang der Umwandlung wenigstens 90 % in einem Schritt beträgt,
(2) physikalisches Entfernen des Katalysators vom Polyetherprodukt von Schritt (1) und
(3) Inkontaktbringen des Polyetherproduktes von Schritt (2) mit einem sauren Katalysator bei einer Temperatur von etwa 25 bis etwa 180°C und für einen Zeitraum von etwa 1 bis etwa 24 Stunden, wodurch von 60 bis 100 % der terminalen Propenyl-Ungesättigtheit entfernt werden und der entsprechende Polyether mit einer zusätzlichen Hydroxylgruppe erhalten wird.

## Revendications

1. Procédé pour la préparation d'un polyéther possédant une insaturation terminale réduite comprenant les étapes consistant :
(1) à mettre en contact un polyéther possédant au moins un groupe hydroxyle et une insaturation allyle terminale avec un catalyseur d'isomérisation grâce auquel l'insaturation terminale réduite du polyéther est réduite par conversion en insaturation propényle terminale, où la quantité de conversion est d'au moins 90 pourcent en une étape,
(2) à éliminer le catalyseur du produit polyéther de l'étape (1) et
(3) à mettre en contact le produit polyéther de l'étape (2) avec un catalyseur acide grâce à quoi on élimine de 60 à 100 pourcent de l'insaturation propényle terminale et on obtient le polyéther correspondant possédant un groupe hydroxyle supplémentaire.

2. Procédé selon la revendication 1, dans lequel le polyéther possédant une insaturation allyle terminale contient de plus une insaturation propényle terminale.

3. Procédé selon la revendication 1, dans lequel le polyéther contient au moins 50 pourcent en poids de motifs oxypropylène provenant de l'oxyde de propylène.

4. Procédé selon la revendication 1, dans lequel le polyéther est un polyéther polyol.

5. Procédé selon la revendication 4, dans lequel le polyol est un polyoxypropylèneglycol.

6. Procédé selon la revendication 1, dans lequel le catalyseur dans l'étape (1) est mis en contact avec le polyéther à une température d'environ 80°C à environ 180°C et pendant une durée d'environ 1 à environ 24 heures.

7. Procédé selon la revendication 1, dans lequel le catalyseur d'isomérisation de l'étape (1) est choisi dans le groupe formé par les hydroxydes de césium, de sodium et de potassium.

8. Procédé selon la revendication 7, dans lequel le catalyseur d'isomérisation est l'hydroxyde de potassium.

9. Procédé selon la revendication 1, dans lequel le catalyseur d'isomérisation de l'étape (1) est l'oxyde de magnésium.

10. Procédé selon la revendication 1, dans lequel le catalyseur d'isomérisation de l'étape (1) est l'hydrotalcite de formule :
Mg_{0,7}Al_{0,3}O_{0,85}

11. Procédé selon la revendication 1, dans lequel le catalyseur d'isomérisation de l'étape (1) est choisi dans le groupe formé par le chlorure de ruthénium (III), le chlorure de tris(triphénylphosphine)ruthénium (II), le chlorure de tris(triphénylphosphine)rhodium (I) et l'hydrate d'oxyde de ruthénium.

12. Procédé selon la revendication 1, dans lequel le catalyseur dans l'étape (1) est présent à raison d'environ 0,01 à environ 10 pourcent en poids sur la base du poids du polyéther.

13. Procédé selon la revendication 1, dans lequel dans l'étape (1) le polyéther est mis en contact avec le catalyseur d'isomérisation dans un procédé en continu.

14. Procédé selon la revendication 1, dans lequel le catalyseur acide est mis en contact, dans l'étape (3), avec le produit polyéther à une température d'environ 25°C à environ 180°C et pendant une durée d'environ 1 à environ 24 heures.

15. Procédé selon la revendication 1, dans lequel le catalyseur acide est une zéolite acide.

16. Procédé selon la revendication 1, dans lequel le catalyseur acide est un acide de Lewis choisi dans le groupe formé par les halogénures ou sels des métaux du Groupe IIIA.

17. Procédé selon la revendication 1, dans lequel le catalyseur acide est présent, dans l'étape (3), à raison d'environ 0,2 à environ 25 pourcent en poids sur la base du poids du produit polyéther.

18. Procédé selon la revendication 1, dans lequel, dans l'étape (3), le polyéther est mis en contact avec le catalyseur acide dans un procédé en continu.

19. Procédé pour la préparation d'un polyéther polyol possédant une insaturation terminale réduite comprenant les étapes consistant :
(1) à faire réagir de l'oxyde de propylène avec un amorceur possédant au moins deux groupes hydroxyle en présence d'un catalyseur basique à une température d'environ 90°C à environ 150°C, au moins une partie du polyéther polyol résultant étant **caractérisée en ce qu'**elle possède une insaturation allyle terminale,
(2) à chauffer le polyéther polyol de l'étape (1) contenant le catalyseur basique à une température d'environ 110°C à environ 190°C, ainsi l'insaturation allyle terminale est réduite par conversion en insaturation propényle terminale, où la quantité de conversion est d'au moins 90 pourcent en une étape,
(3) à éliminer le catalyseur basique du produit polyéther polyol de l'étape (2), et
(4) à mettre en contact lé produit polyéther polyol de l'étape (3) avec une zéolite acide grâce à quoi on élimine de 60 à 100 pourcent de l'insaturation propényle terminale et on obtient le polyol polyéther correspondant.

20. Procédé selon la revendication 19, dans lequel le polyéther polyol possédant une insaturation allyle terminale contient de plus une insaturation propényle terminale.

21. Procédé selon la revendication 19, dans lequel l'amorceur est un polyoxypropylèneglycol possédant une masse moléculaire d'environ 200 à environ 1 000.

22. Procédé selon la revendication 19, dans lequel l'amorceur est un polyoxypropylèneglycol possédant une masse moléculaire de 400.

23. Procédé selon la revendication 19, dans lequel le catalyseur basique de l'étape (1) est choisi dans le groupe formé par les hydroxydes de césium, de sodium et de potassium.

24. Procédé selon la revendication 19, dans lequel le catalyseur basique est l'hydroxyde de potassium.

25. Procédé selon la revendication 19, dans lequel le catalyseur est présent, dans l'étape (1), à raison d'environ 0,5 à environ 10 pourcent en poids sur la base du poids de l'amorceur.

26. Procédé selon la revendication 19, dans lequel, dans l'étape (1), le catalyseur est l'hydroxyde de potassium et l'amorceur est un polyoxypropylèneglycol possédant une masse moléculaire d'environ 200 à environ 600.

27. Procédé selon la revendication 19, dans lequel, dans l'étape (2), on chauffe le polyéther polyol contenant le catalyseur basique pendant environ 0,5 à environ 24 heures.

28. Procédé selon la revendication 19, dans lequel la zéolite acide est présente, dans l'étape (4), à raison d'environ 0,2 à environ 25 pourcent en poids sur la base du poids du produit polyéther polyol.

29. Procédé selon la revendication 19, dans lequel le polyéther polyol, dans l'étape 4, est continuellement mis en contact avec la zéolite acide.

30. Procédé pour la préparation d'un polyéther polyol possédant une insaturation terminale réduite comprenant les étapes consistant :
(1) à chauffer un mélange contenant un polyéther polyol possédant une insaturation allyle terminale et un catalyseur d'isomérisation grâce à quoi l'insaturation allyle terminale du polyéther est réduite par conversion en insaturation propényle terminale, où la quantité de conversion, en une étape, est d'au moins 90 pourcent,
(2) à éliminer le catalyseur du polyéther polyol de l'étape (1) et
(3) à mettre en contact le polyéther polyol de l'étape (2) avec une zéolite acide grâce à quoi on élimine de 60 à 100 pourcent de l'insaturation propényle terminale du polyéther polyol et on obtient le polyéther polyol correspondant possédant un groupe hydroxyle supplémentaire.

31. Procédé selon la revendication 30, dans lequel le polyéther contient de plus une insaturation propényle terminale.

32. Procédé selon la revendication 30, dans lequel le polyéther est un polyoxypropylèneglycol.

33. Procédé selon la revendication 30, dans lequel on chauffe le mélange à une température d'environ 80°C à environ 180°C et pendant une durée d'environ 1 à environ 24 heures.

34. Procédé selon la revendication 30, dans lequel le catalyseur d'isomérisation de l'étape (1) est choisi dans le groupe formé par les hydroxydes de césium, de sodium et de potassium.

35. Procédé selon la revendication 35, dans lequel le catalyseur d'isomérisation est l'hydroxyde de potassium.

36. Procédé selon la revendication 30, dans lequel, dans l'étape (1), le catalyseur d'isomérisation est présent dans le mélange à raison d'environ 0,10 à environ 15 pourcent en poids sur la base du poids du polyéther polyol.

37. Procédé selon la revendication 30, dans lequel, dans l'étape (3), la zéolite acide est mise en contact avec le produit polyéther polyol à une température d'environ 25°C à environ 180°C.

38. Procédé selon la revendication 30, dans lequel la zéolite acide est présente, dans l'étape (3), à raison d'environ 0,2 à environ 25 pourcent en poids sur la base du poids du polyéther polyol.

39. Procédé pour la préparation d'un polyéther comprenant l'étape consistant à mettre en contact un polyéther possédant au moins un groupe hydroxyle et une insaturation allyle et propényle terminale avec un catalyseur comprenant un composé du ruthénium supporté sur un gel de silice à une température d'environ 20°C à environ 190°C et pendant une durée d'environ 0,5 à environ 24 heures grâce à quoi on obtient un produit polyéther pratiquement exempt d'insaturation allyle et propényle.

40. Procédé selon la revendication 39, dans lequel le composé du ruthénium est le chlorure de ruthénium (III).

41. Procédé pour la préparation d'un polyéther polyol comprenant l'étape consistant à faire réagir de l'oxyde de propylène en présence de chlorure de tris(triphénylphosphine)ruthénium (II) avec un amorceur polyoxypropylèneglycol possédant une masse moléculaire d'environ 100 à environ 10 000 et contenant d'environ 0,5 à environ 10 pourcent en poids d'hydroxyde de potassium, sur la base du poids d'amorceur polyoxypropylèneglycol, grâce à quoi on obtient un produit polyoxypropylèneglycol exempt d'insaturation terminale.

42. Procédé selon la revendication 41, dans lequel on fait réagir le propylèneglycol avec le polyoxypropylèneglycol à une température d'environ 90°C à environ 150°C.

43. Procédé selon la revendication 41, dans lequel le chlorure de tris(triphénylphosphine)ruthénium (II) est présent à raison d'environ 0,1 à environ 1,00 pourcent en poids sur la base du poids de l'amorceur.

44. Procédé pour la préparation d'un polyéther possédant une insaturation terminale réduite comprenant l'étape consistant :
(1) à mettre en contact un polyéther possédant au moins un groupe hydroxyle et une insaturation allyle terminale avec un catalyseur d'isomérisation choisi dans le groupe formé par les hydroxydes de césium, de sodium et de potassium à une température d'environ 80°C à environ 180°C et pendant une durée d'environ 1 à environ 24 heures, grâce à quoi l'insaturation allyle terminale du polyéther est réduite par conversion en insaturation propényle terminale, où la quantité de conversion, en une étape, est d'au moins 90 pourcent,
(2) à éliminer physiquement le catalyseur du produit polyéther de l'étape (1) et
(3) à mettre en contact le produit polyéther de l'étape (2) avec une zéolite acide à une température d'environ 25°C à environ 180°C et pendant une durée d'environ 1 à environ 24 heures, grâce à quoi on élimine de 60 à 100 pourcent de l'insaturation propényle terminale et on obtient le polyéther correspondant possédant un groupe hydroxyle supplémentaire.
